# EUROPEAN PATENT APPLICATION

(11) **EP 4 596 062 A1**
(43) Date of publication of application: **06.08.2025**
(21) Application number: 22936592.9
(22) Date of filing: 11.11.2022
(51) Int. Cl.: A63F 13/24, A63F 13/92

(54) **PORTABLE GAME DEVICE**

(71) Applicant: Nintendo Co., Ltd., Kyoto-shi, Kyoto 601-8501 (JP)
(72) Inventor: AMANO, Yasuhiro, Kyoto-shi, Kyoto 601-8501 (JP); TAOKA, Sai, Kyoto-shi, Kyoto 601-8501 (JP); MIYAKE, Haruki, Kyoto-shi, Kyoto 601-8501 (JP); SHIROMOTO, Saki, Kyoto-shi, Kyoto 601-8501 (JP); ODANAKA, Kohei, Kyoto-shi, Kyoto 601-8501 (JP)
(74) Representative: von Tietzen und Hennig, Nikolaus
(86) International application number: PCT/JP2022/042102
(87) International publication number: WO 2023/195197

(57) **Abstract**

A portable game device 1 includes: a front surface 11; a back surface 12 provided at an opposite side from the front surface; and a top surface 13, bottom surface 14, left surface 15, and right surface 16 provided between the front surface and the back surface so as to connect them. The front surface is provided with a display 5 for showing an image and with operation parts 31, 32 provided at both of left and right sides of the display and used for input from a user. The top surface is provided with a power operation part 41, and the bottom surface is provided with a home menu operation part 43.

## Description

### FIELD

The present disclosure relates to a portable game device.

### BACKGROUND

Known since the past has been a portable game device, able to be held by a user, which is provided with a home button and power button (for example, PTL 1). In particular, in the portable game device described in PTL 1, the home button is provided at the front surface and the power button is provided at the top surface.

### [Citation List]

### [Patent Literature]

[PTL 1] Japanese Unexamined Patent Publication No. 2021-012652

### SUMMARY

### [Technical Problem]

There is room for improvement in an arrangement of the buttons in a portable game device so as to make the portable game device more compact or make an area of the display larger.

In view of the above problem, an object of the present invention is to improve the arrangement of buttons in a portable game device.

### [Solution to Problem]

The gist of the present disclosure is as follows.
(1) A portable game device comprising: a front surface; a back surface provided at an opposite side from the front surface; and a top surface, bottom surface, left surface, and right surface provided between the front surface and the back surface so as to connect them, wherein
   the front surface is provided with a display for showing an image and with control parts provided at both of left and right sides of the display and used for input from a user,
   the top surface is provided with a power control part, and
   the bottom surface is provided with a home menu control part.
(2) The portable game device according to above (1), wherein
   the power control part is provided at the top surface at a position offset to one side from a center in the left-right direction, and
   the home menu control part is provided at the bottom surface at a center in the left-right direction.
(3) The portable game device according to above (2), wherein
   the bottom surface is provided with an opening extending passing through a side wall defining the bottom surface at least at one side of the home menu control part in the left-right direction, and
   a screen image saving control part is provided at further the one side from the opening in the left-right direction.
(4) The portable game device according to above (3), wherein the home menu control part is larger than the screen image saving control part.
(5) The portable game device according to above (3) or (4), wherein
   the openings are provided respectively at both sides of the home menu control part in the left-right direction,
   the screen image saving control part is provided at further outside from the opening at the one side in the left-right direction,
   control parts are not provided at further outside from the opening at the other side.
(6) The portable game device according to any one of above (3) to (5), wherein the screen image saving control part is provided at an opposite side from a side where the power control part is provided with respect to the center of the portable game device in the left-right direction.
(7) The portable game device according to any one of above (1) to (6), wherein
   the power control part is provided at the top surface at a position offset to one side from a center in the left-right direction, and
   the top surface is provided with a volume control part for adjusting a sound volume of the portable game device at further the one side of the power control part.
(8) The portable game device according to above (7), wherein
   a control part used for input from the user is further provided at the top surface, and
   the control part provided at the top surface is arranged at further outside from the volume control part in the left-right direction.
(9) The portable game device according to any one of above (1) to (8), wherein control parts, each of which performs the same function regardless of a game application being run when being operated, are provided only at the top surface and the bottom surface.

### [Advantageous Effects of Invention]

According to the present disclosure, an arrangement of buttons in a portable game device is improved.

### BRIEF DESCRIPTION OF DRAWINGS

FIG. 1 is a front view of a portable game device.
FIG. 2 is a back view of the portable game device.
FIG. 3 is a top view of the portable game device.
FIG. 4 is a bottom view of the portable game device.

### DESCRIPTION OF EMBODIMENTS

Below, referring to the drawings, embodiments will be explained in detail. It should be noted that in the following explanation, similar component elements will be assigned the same reference numerals.

### <Overall Configuration>

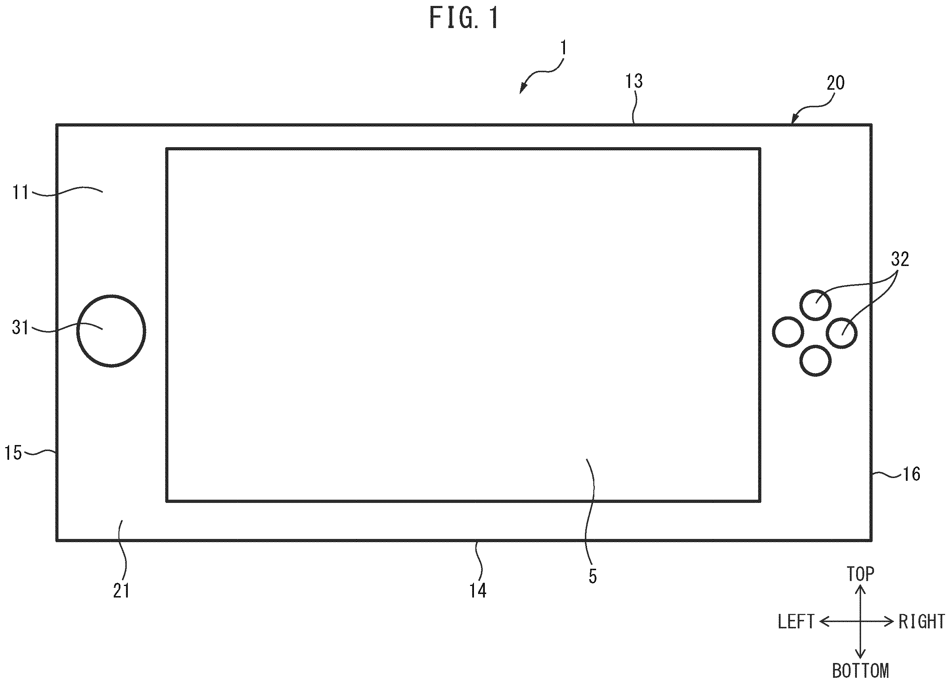

Referring to FIGS. 1 to 4, the configuration of a portable game device 1 according to one embodiment will be explained. The portable game device 1 is a game device used for a user to play a game while holding it. The user operates control parts 31 to 34 and 41 to 44 provided at the portable game device 1 while looking at a display 5 provided at the portable game device 1. The portable game device 1 controls the portable game device 1, specifically for example controls the video of the display 5, controls the audio, or the like based on signals transmitted from the control parts 31 to 34 and 41 to 44 due to operation of the control parts 31 to 34 and 41 to 44 by the user.

It should be noted that, the portable game device 1 may also be configured to be connected to an outside monitor by wire or wirelessly to display an image on the outside monitor in place of the display 5 of the portable game device 1 or together with the display 5. Further, the portable game device 1 may be configured to be able to run any other applications as long as it can run game applications.

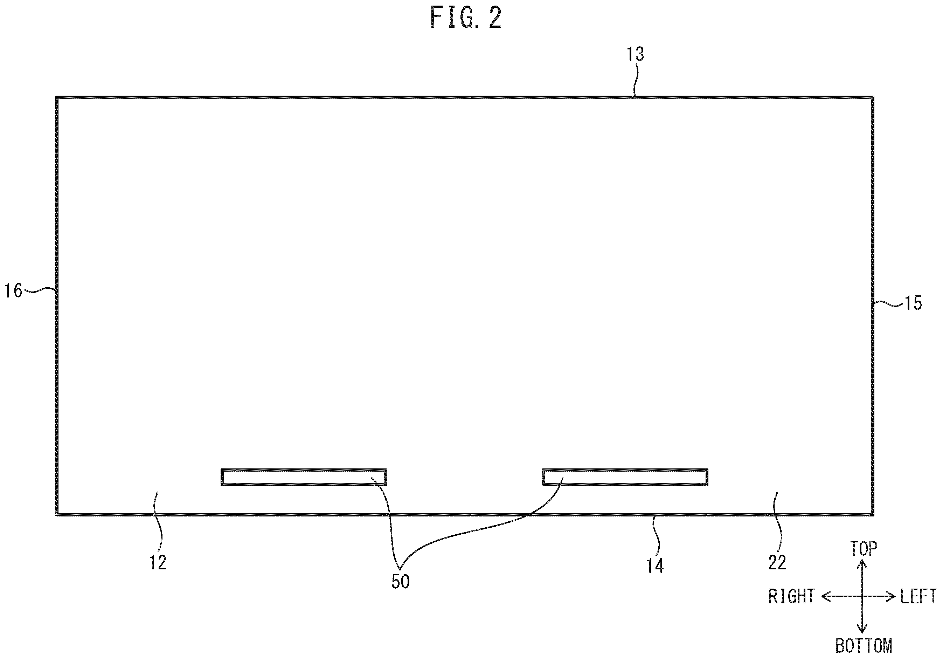

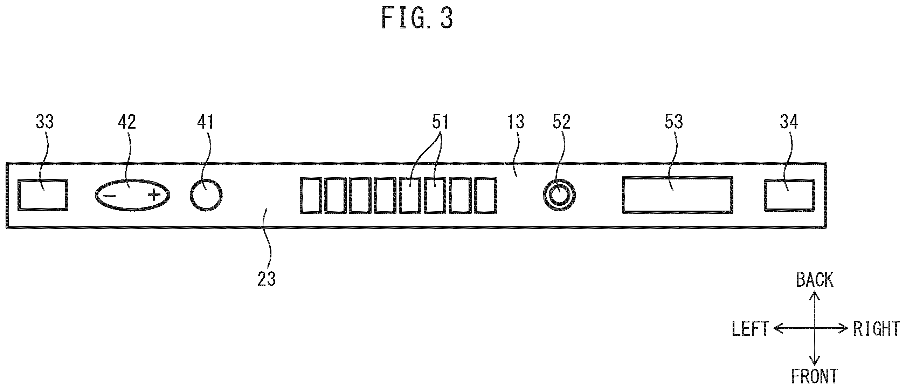

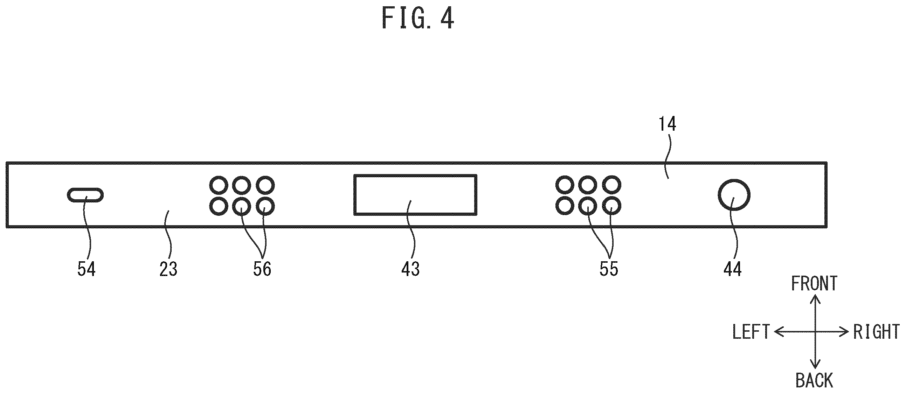

FIG. 1 is a front view of the portable game device 1, while FIG. 2 is a back view of the portable game device 1. Further, FIG. 3 is a top view of the portable game device 1, while FIG. 4 is a bottom view of the portable game device 1.

In this Description, the direction at which the display 5 is provided with respect to the portable game device 1 is referred to as the "front", while the opposite direction to the direction at which the display 5 is provided with respect to the portable game device 1 is referred to as the "back". Further, the top direction, bottom direction, left direction, and right direction seen from the front (seen from the user) when a user uses the portable game device 1 by holding the portable game device 1 and viewing the display 5 are respectively referred to as the "top", "bottom", "left", and "right" of the portable game device 1.

As shown in FIGS. 1 to 4, the portable game device 1 includes a front surface 11 provided with the display 5, a back surface 12 provided at the opposite side from the front surface 11, and a top surface 13, bottom surface 14, left surface 15, and right surface 16 formed between these front surface 11 and back surface 12 to connect the front surface 11 and the back surface 12. The top surface 13 is a side surface provided at the top of the portable game device 1, and the bottom surface is a side surface provided at the bottom of the portable game device 1. The left surface 15 is a side surface provided at the left of the portable game device 1, and the right surface 16 is a side surface provided at the right of the portable game device 1.

In the present embodiment, the front surface 11 of the portable game device 1 is formed substantially flat over its entirety. Further, in the present embodiment, the front surface 11 of the portable game device 1 has a rectangular shape when viewed from the front. The sides positioned at the top and bottom form long sides, while the sides positioned at the left and right form short sides. In other words, the sides of the left-right direction is longer than the sides of the top-bottom direction. The display 5 is provided at the center of the rectangular shaped front surface 11. Further, in the present embodiment, the front surface 11 and the top surface 13 are provided with control parts 31 to 34 used for inputting operations for progression in a game application being run by a processing device. On the other hand, the back surface 12 of the portable game device 1, similarly to the front surface 11, has a rectangular shape with rounded corners when viewed from the back, and the sides positioned at the top and bottom form long sides, while the sides positioned at the left and right form short sides. In the present embodiment, the back surface 12 is not provided with control parts 31 to 34. It should be noted that the front surface 11 may also have a rectangular shape with rounded corners.

The top surface 13, bottom surface 14, left surface 15, and right surface 16 of the portable game device 1 extend substantially perpendicularly with respect to the front surface 11 between the edges of the front surface 11 and the edges of the back surface 12. The top surface 13 extends between the long sides on top side of the front surface 11 and the back surface 12, while the bottom surface 14 extends between the long sides on bottom side of the front surface 11 and the back surface 12. The left surface 15 extends between the short sides on left side of the front surface 11 and the back surface 12,while the right surface 16 extends between the short sides on right side of the front surface 11 and the back surface 12. In the present embodiment, the top surface 13, bottom surface 14, left surface 15, and right surface 16 are formed substantially flat. It should be noted that if the front surface 11 has a rectangular shape with rounded corners, the top surface 13 may be curved toward the left surface 15 and the right surface 16 at regions near the left and right ends so as to match the shapes of the rounded corners of the front surface 11 and the back surface 12. Similarly, the bottom surface 14 may be curved toward the left surface 15 and the right surface 16 at regions near the left and right ends so as to match the shapes of the rounded corners of the front surface 11 and the back surface 12.

As shown in FIGS. 1 to 4, the portable game device 1 has a housing 20. The circuit board and electronic components (not shown) forming the portable game device 1 are accommodated in or attached to the housing 20. The electronic components include a processing device (processor) of the portable game device 1 controlling the display 5, speaker, or the like in accordance with inputs from the control parts 31 to 34 or the like, a memory storing various kinds of data used in the processing device, a battery supplying power to the display 5, the processing device, or the like, a speaker outputting sound, or the like (all not shown).

The housing 20 has a front wall 21 provided at the front side of the portable game device 1, a back wall 22 provided at the back side of the portable game device 1, and side walls 23 provided in the front-back direction between these front wall 21 and back wall 22. The side walls 23 extend between the edge of the front wall 21 and the edge of the back wall 22 around the entire circumference.

In the present embodiment, a surface at the front of the front wall 21 defines the front surface 11 of the portable game device 1, while a surface at the back of the back wall 22 defines the back surface 12 of the portable game device 1. Further, in the present embodiment, the outside surface of the side wall 23 at the top side, the outside surface of the side wall 23 at the bottom side, the outside surface of the side wall 23 at the left side, and the outside surface of the side wall 23 at the right side define the top surface 13, bottom surface 14, left surface 15, and right surface 16 of the portable game device 1, respectively. In the present embodiment, the front wall 21 and side walls 23 are integrally formed, and the housing 20 is formed by attaching a separate back wall 22 to the side walls 23.

### <Configuration of Front Surface>

As shown in FIG. 1, the front surface 11 of the portable game device 1 is provided with the display 5 for showing an image and a first control part 31 and second control part 32 used for input from the user.

The display 5 is a device connected to a processing device arranged in the housing 20 and showing an image corresponding to a signal from the processing device. The display 5, as shown in FIG. 1, forms part of the front surface 11 of the portable game device 1. As one example, the display 5 is placed on a surface of a part sunken down in the back wall 23 direction among the front surface of the front wall 21. The display 5 has a substantially flat surface. The display 5 is, for example, a liquid crystal display, EL (electroluminescence) display, or plasma display. The display 5 may also be provided on its front surface with a touch panel functioning as an input device. It should be noted that, in another embodiment, for example, a cover may be provided so as to cover the surface of the front wall 21 or the display 5. At this time, the front surface of the cover forms at least part of the front surface 11 of the portable game device 1.

The first control part 31 and the second control part 32 function as input devices operated by the user for input to the processing device of the portable game device 1. The first control part 31 and the second control part 32 are connected to the processing device and transmit signals corresponding to operations performed by the user to the processing device. The first control part 31 and the second control part 32 are, as one example, used for inputting operations for progression of a game application being run by the processing device. Therefore, the first control part 31 and the second control part 32 perform different functions depending on a game application being run by the processing device. The first control part 31 and the second control part 32, for example, include buttons, switches, levers, joysticks, slide sticks, etc. Further, they include touch panels, mechanisms provided with pressure sensors for detecting pressure, and the like. For example, in the case of buttons, they may be shaped as circular, rectangular, oval, crossed, and various other shapes.

As shown in FIG. 1, in the present embodiment, a first control part 31, which is a joystick, is provided at the left side of the display 5. In other words, a control part used for input of direction is provided at the left side of the display 5. It should be noted that a control part, which is a button, may be provided at the left side of the display 5. Further, four second control parts 32, which are buttons, are provided at the right side of the display 5. It should be noted that, control parts used for input of directions may be provided at the right side of the display 5. In this way, in front surface 11, the control parts 31, 32 are provided at both of the left and right sides of the display 5, respectively. These first control part 31 and second control parts 32 are arranged so as to stick out to the front from the front surface 11. Further, these first control part 31 and second control parts 32 are arranged so as to extend passing through openings formed in the front wall 21.

### <Configuration of Back Surface>

As shown in FIG. 2, in the present embodiment, intake openings 50 are provided at the back surface 12 of the portable game device 1. The intake openings 50 are openings for sucking in outside air to the inside of the housing 20 for cooling electronic components, such as the processing device. The intake openings 50 extend passing through the back wall 22. In particular, in the present embodiment, the intake openings 50 are arranged at the back surface 12 so as to extend at both of the left and right sides from the center in the left-right direction. It should be noted that, the intake openings 50 may be provided at surfaces other than the back surface 12, for example the bottom surface 14.

### <Configuration of Top Surface>

As shown in FIG. 3, a third control part 33 and fourth control part 34, power control part 41, volume control part 42, exhaust openings 51, earphone jack 52, and slot opening 53 are provided at the top surface 13 of the portable game device 1.

The third control part 33 and the fourth control part 34, like the first control part 31 and the second control part 32, are operated by the user and function as input devices for input to the processing device of the portable game device 1. In the present embodiment, the third control part 33 and the fourth control part 34 are both buttons, but may also be switch control parts (for example, control part switches states by being slid), levers, or the like. Further, these third control part 33 and fourth control part 34 are arranged so as to extend passing through openings formed at the side wall 23 of the top side. It should be noted that, if both of the left and right sides of the top surface 13 are curved, the third control part 33 and the fourth control part 34 may also be formed so as to respectively extend from the top surface 13 to the left surface 15 and the right surface 16. At this time, the third control part 33 and the fourth control part 34 may also be curved shapes.

It should be noted that, in the present embodiment, the control parts 31 to 34 used for inputting operations for progression of a game application being run by the processing device are provided only at the front surface 11 and the top surface 13. However, these control parts may be provided at the bottom surface 14, left surface 15, right surface 16, or back surface 12.

In the present embodiment, the power control part 41 is a button used for starting up the portable game device 1 and ending its operation. The power control part 41 is connected to the processing device and transmits a signal corresponding to an operation performed by the user to the processing device. The processing device executes processing corresponding to this signal. In the present embodiment, if the power control part 41 is pressed when the power of the portable game device 1 is off, the portable game device 1 is started up (power is turned on). On the other hand, if the power control part 41 is held down when the power of the portable game device 1 is on, the operation of the portable game device 1 is ended (power is turned off). At this time, it is also possible that the power is not immediately turned off by holding down or possible that a user interface for making the user decide whether to really turn off the power be shown on the display 5. The power control part 41 performs the same function of starting up the portable game device 1 and ending operation thereof regardless of a game application being run at the processing device. In the present embodiment, the power control part 41 is the only control part enabling power of the portable game device 1 to be turned on. Further, in the present embodiment, the power control part 41 is the only control part able to turn off the power of the portable game device 1 or able to make a user interface for turning off the power be directly shown. Further, the power control part 41 is a control part unrelated with progression of a game application. It should be noted that the power control part 41 may also be used for control of a sleep state of the portable game device 1. As one example, the portable game device 1 may enter a sleep mode if the power control part 41 is pressed short when the power of the portable game device 1 is on. Further, the portable game device 1 may be awaken from the sleep mode when the power control part 41 is pressed when the portable game device 1 is in the sleep mode.

As shown in FIG. 3, the power control part 41 is provided at the top surface 13 offset to one side from the center in the left-right direction. In particular, in the present embodiment, the power control part 41 is provided at the top surface 13 offset to the left side from the center. In the present embodiment, the exhaust openings 51 are provided at the top surface 13 near the center in the left-right direction, therefore the power control part 41 is provided at a position offset to one side (in the present embodiment, the left) from the exhaust openings 51 in the left-right direction. Further, the power control part 41 is positioned at the inside from the third control part 33 in the left-right direction. Furthermore, the power control part 41 is arranged so as to extend passing through an opening formed in the side wall 23 at the top side.

In the present embodiment, the volume control part 42 is a control button for adjusting a sound volume of the portable game device 1. In the present embodiment, the sound volume becomes greater if one side of the volume control part 42 in the left-right direction is pressed and becomes smaller if the other side of the volume control part 42 in the left-right direction is pressed. The volume control part 42 also performs the same function of controlling the volume of the sound regardless of a game application being run by the processing device. Further, the volume control part 42 is also a control part unrelated with progression of a game application.

The volume control part 42 is also provided at a position offset to one side from the center of the top surface 13 in the left-right direction, in particular offset in the same direction as the power control part 41. Therefore, in the present embodiment, the power control part 41 and the volume control part 42 are provided at one side from the center of the top surface 13. Further, control parts unrelated with the progression of a game application are not provided at the opposite side from these with respect to the center (in the present embodiment, at the right side from the center). Further, in the present embodiment, the volume control part 42 is positioned to the left from the power control part 41 in the left-right direction (i.e., in a direction in which the power control part 41 offsets from the center of the top surface 13). In addition, the volume control part 42 is also positioned at the inside from the third control part 33 in the left-right direction. Further, the volume control part 42 is also arranged so as to extend passing through an opening formed in the side wall 23 at the top side.

It should be noted that, the power control part 41 and the volume control part 42 may also be arranged an opposite positions from each other. Further, in the present embodiment, the power control part 41 and the volume control part 42 are arranged at positions offset to the left from the center of the top surface 13 in the left-right direction, but may also be arranged at positions offset to the right from the center of the top surface 13. Further, the power control part 41 and the volume control part 42 are arranged at positions offset from the center of the top surface 13 in the same directions in the left-right direction, but may also be arranged at positions offset from the center of the top surface 13 at different directions from each other. In this case, for example, the power control part 41 is arranged at a position offset from the center to the left, while the volume control part 42 is arranged at a position offset from the center to the right. In either case, as long as the power control part 41 is provided at the top surface 13, the power control part 41 and the volume control part 42 may be provided anywhere.

The exhaust openings 51 are openings for exhausting the air which had absorbed heat from electronic components, such as the processing device, to the outside of the housing 20. The exhaust openings 51 extend passing through the side wall 23 at the top side. In the present embodiment, as shown in FIG. 3, the top surface 13 is provided with a plurality of exhaust openings 51 aligned in the left-right direction. Further, the plurality of the exhaust openings 51 are provided near the center of the top surface 13 in the left-right direction. It should be noted that, the exhaust openings 51 may be provided at a region away from the center of the top surface 13, or may be provided at a surface other than the top surface 13, for example, the back surface 12. In the present embodiment, air sucked into the housing 20 through the intake openings 50 provided at the back surface 12 cools the electronic components, then is exhausted to the outside from exhaust openings 51 provided at the top surface 13.

The earphone jack 52 is a terminal for connection of an earphone. The earphone jack 52 is provided at a position offset from the center of the top surface 13 to one side in the left-right direction (in the present embodiment, a position offset to the right). Further, in the present embodiment, the earphone jack 52 is positioned at the inside from the slot opening 53 in the left-right direction. It should be noted that, instead of the earphone jack 52, the top surface 13 may, for example, be provided with a connector for connecting a cord for charging or a connector for connecting a cord for an external monitor.

The slot opening 53 is used for insertion of a storage medium (memory card, or the like) for storing a game program or data. The slot provided at the slot opening 53 is connected to electronic components, such as the processing device. The slot opening 53 is provided at a position offset to one side from the center of the top surface 13 in the left-right direction, in particular a position offset in the same direction as the earphone jack 52. It should be noted that in FIG. 3, a cover for covering the slot opening 53 is shown by reference numeral 53.

It should be noted that, the earphone jack 52 and the slot opening 53 are not necessarily provided at the top surface 13. Therefore, they may be provided at other side surface, such as the bottom surface 14, left surface 15, or right surface 16.

### <Configuration of Bottom Surface>

As shown in FIG. 4, the bottom surface 14 of the portable game device 1 is provided with a home menu control part 43, screen image saving control part 44, connector 54, and speaker openings 55, 56.

In the present embodiment, the home menu control part 43 is a button for opening the home menu screen. The home menu control part 43 is connected with the processing device and transmits, to the processing device, a signal corresponding to an operation performed by the user. The processing device execute processing corresponding to that signal. If the home menu control part 43 is operated while any game application is running, the home menu screen is shown on the display 5 instead of or in addition to the screen of that application. In the present embodiment, the home menu screen is a screen showing a list of applications including game applications able to be launched at the portable game device 1. The user can select an application to be launched at the home menu screen. Further, the home menu screen may include items for shifting to setting screens for determining settings of the portable game device 1 (for example, settings of brightness, contrast, or the like of the display 5, communication settings, etc.). It should be noted that, the portable game device 1 may be designed to enter the sleep mode by a specific item being selected at the home menu screen. In addition, the portable game device 1 may also be designed so that when it is in the sleep mode, the portable game device 1 is awaken from the sleep mode if the home menu control part 43 is pressed. In the present embodiment, the home menu control part 43 also performs the same function of opening the home menu screen regardless of a game application being run at the processing device. The home menu control part 43 is also a control part unrelated with the progression of a game application. Further, in the present embodiment, the home menu control part 43 is the only control part able to directly show the home menu screen at the portable game device 1 while it has been started up. It should be noted that, in another embodiment, depending on the application, at least at part of the situations, when the home menu control part 43 is pressed, a function other than showing the home menu screen may be performed. In this case, the home menu screen may be unable to be directly shown by operation of any of the control parts.

In the present embodiment, the home menu control part 43 is provided at the center of the bottom surface 14 in the left-right direction. Further, the home menu control part 43 is arranged so as to extend through an opening formed in the side wall 23 at the bottom side. It should be noted that, as long as the home menu control part 43 is provided at the bottom surface 14, it does not necessarily have to be provided at the center of the bottom surface 14.

In the present embodiment, the screen image saving control part 44 is a button for storing a screen image being shown on the display 5. It should be noted that a "screen image" is not limited to a still image and also includes a moving image. Further, there is no need for the data to be absolutely identical to the image being shown at the display at that point of time, and it may be processed or reduced in data size therefrom. The screen image saving control part 44 is connected to the processing device and transmits a signal corresponding to an operation performed by the user to the processing device. The processing device executes processing corresponding to this signal. As one example, if the screen image saving control part 44 is operated while any game application is running, the image being shown at the display 5 at that time is stored in the memory. It should be noted that, it may also be stored not to the memory of the portable game device 1, but to a server or the like. The screen image saving control part 44 is smaller than the home menu control part 43. In this way, due to the home menu control part 43 and the screen image saving control part 44 being different in size, the user is kept from mistakenly pressing these control parts. The screen image saving control part 44 also performs the same function of storing an image regardless of a game application being run at the processing device. Further, the screen image saving control part 44 is a control part unrelated with progression of a game application. It should be noted that, in another embodiment, the size of the screen image saving control part 44 may be the same as or larger than the home menu control part 43.

As shown in FIG. 4, the screen image saving control part 44 is provided at a position offset to one side from the center of the bottom surface 14 in the left-right direction. In particular, in the present embodiment, the screen image saving control part 44 is provided at a position offset to the right from the center of the bottom surface 14. Further, the screen image saving control part 44 is arranged so as to extend passing through an opening formed at the side wall 23 of the bottom side. On the other hand, in the present embodiment, at the opposite side from the side, where the screen image saving control part 44 is provided (in the present embodiment, the left side from the center of the bottom surface 14), with respect to the center of the bottom surface 14, no control part unrelated with progression of a game application is provided. In particular, no type of control part is provided at the opposite side in the present embodiment.

The connector 54 is used for connecting with an outside connector. In the present embodiment, the connector 54 is used for connecting with a charging cable and for connecting with an external monitor cable. The connector 54 is, for example, a USB terminal. The connector 54 is provided at a position offset to one side from the center of the bottom surface 14 in the left-right direction, in particular at a position offset to the opposite direction from the screen image saving control part 44 (in the present embodiment, position offset to the left). It should be noted that, the bottom surface 14 may also be provided with another terminal, such as an earphone jack, in place of or in addition to the connector 54.

The speaker openings 55, 56 are openings for emitting sound output from a speaker arranged inside the housing 20 to the outside. In the present embodiment, the speaker openings 55, 56 are sets of large numbers of small openings. The speaker openings 55, 56 extend passing through the side wall 23 defining the bottom surface 14.

The speaker openings 55, 56 are respectively provided at positions offset to the both sides from the center of the bottom surface 14 in the left-right direction. Therefore, the speaker openings 55 are provided at the both sides of the home menu control part 43 in the left-right direction, respectively. Further, the first speaker openings 55 are provided between the home menu control part 43 and screen image saving control part 44. Therefore, the screen image saving control part 44 is provided at the further right side from the first speaker openings 55 in the left-right direction (i.e., at the side of the direction in which the first speaker openings 55 are offset from the center of the bottom surface 14). On the other hand, the second speaker openings 56 are provided between the home menu control part 43 and the connector 54. Therefore, the connector 54 is provided at the further outside from the second speaker openings 56 in the left-right direction. Further, in the present embodiment, no control parts are provided at the further outside from the second speaker openings 56 in the left-right direction.

It should be noted that the speaker openings 55, 56 need not be sets of small openings, but they may also be single openings respectively provided at the both sides of the bottom surface 14. Further, in the present embodiment, the speaker openings 55, 56 are provided at the both sides of the home menu control part 43 in the left-right direction, but they may be provided at the outside of the home menu control part 43 at only one side of the home menu control part 43. Alternatively, the speaker openings 55, 56 may be provided at another surface, such as the top surface 13, the left surface 15, or the right surface 16. Further, in the present embodiment, the bottom surface 14 is provided with the speaker openings 55, 56, but instead of the speaker openings 55, 56, other type of openings, such as intake openings, exhaust openings, or slot opening may be provided at the positions of the speaker openings 55, 56.

### <Advantageous Effects>

In the present embodiment, the power control part 41 and the home menu control part 43 not used for progression of a game application are not provided at the front surface 11 of the portable game device 1. For this reason, the front surface 11 of the portable game device 1 can be made compact without impairing user operability while a game application is running. Alternatively, it is possible to increase the ratio of the area of the display 5 to the area of the front surface 11 of the portable game device 1 without impairing user operability while a game application is running.

In particular, in the present embodiment, control parts, each of which performs the same function regardless of a game application being run when they are operated (power control part 41, volume control part 42, home menu control part 43, and screen image saving control part 44), are provided at only the top surface 13 or the bottom surface 14. Therefore, the front surface 11 of the portable game device 1 can be made more compact or the ratio of the area of the display 5 can be made larger without impairing the user operability.

In addition, in the present embodiment, the power control part 41 used for starting up the portable game device 1 and ending its operation is provided at the top surface 13. For this reason, the power control part 41 can be easily seen by the user holding the portable game device 1. Accordingly, the power control part 41 can be easily accessed, therefore the convenience for the user is secured. On the other hand, the home menu control part 43 is not necessarily operated unless the user uses the home menu, therefore the home menu control part 43 is provided at the bottom surface 14. The power control part 41 and the home menu control part 43 can be functionally mixed up in terms of, for example, leaving the currently operating application, therefore these can be kept from being provided on the same surface and the user kept from mistakenly pressing them. On the other hand, the bottom surface 14 at which the home menu control part 43 is provided is symmetrically positioned with respect to the top surface 13, therefore, for example, compared to the case where the home menu control part 43 is provided at the back surface 12, the left surface 15, or the right surface 16, the user can easily remember the position of the home menu control part 43 from the functional relationship with the power control part 41.

Further, in the above embodiment, the power control part 41 is provided at a position offset to one side from the center on the top surface 13. In addition, in the present embodiment, the volume control part 42 is also provided at a position offset to one side from the center on the top surface. Here, the control parts 41, 42 provided at the top surface 13 are envisioned as being operated by the index finger of either the left or right hand of the user holding the portable game device 1 by both hands. The power control part 41 and the volume control part 42 are provided at positions offset to one side from the center, the user can easily operate the control parts 41, 42.

Further, in the present embodiment, the power control part 41 is provided at the top surface 13 at the inside from the volume control part 42. If the user mistakenly operates the power control part 41 while running a game application, the game application ends up unintentionally ended. On the other hand, even if the volume control part 42 is mistakenly operated by the user while a game application is running, while the volume will change somewhat, there is little effect on the game application. In the present embodiment, the power control part 41 is arranged at the top surface 13 at the center side (inside) from the volume control part 42, and therefore the power control part 31, which is great in effect on mistaken operation, is kept from being unintentionally operated by the user. In the present embodiment in particular, the third control part 33 is arranged at the top surface 13 at the outside from the volume control part 42. Therefore, when the user operates the third control part 33, there is a possibility of a control part arranged at the inside from the third control part 33 being mistakenly operated. However, in the present embodiment, the volume control part 42 is arranged at the immediate inside of the third control part 33, therefore even if mistakenly operated, the effect on the game application is small.

On the other hand, in the present embodiment, the home menu control part 43 is provided at the center at the bottom surface 14. In operating the control parts at the bottom surface 14, the user is envisioned to operate them by one of the two hands, which had held the portable game device 1 for operation, while once taking it off from the portable game device 1. Therefore, there is little need for arranging the home menu control part 43 toward the left side or the right side of the bottom surface 14 so as to enable the portable game device 1 to be operated while being held. Further, the home menu control part 43, for example, has no control parts having symmetrical relationships like a +button and -button, therefore even if arranged at the bottom surface 14 at the center, there is little if any inconvenience in operation. Furthermore, the user holding the portable game device 1 would is hard in visually checking the bottom surface 14, therefore the home menu control part 43 is arranged at the center of the bottom surface 14 whereby the user can easily operate the home menu control part 43 without viewing the bottom surface 14. Further, while the power control part 41 is arranged offset from the center of the top surface 13, the home menu control part 43 is arranged at the center of the bottom surface 14. Therefore, they are offset not only in the top-bottom relationship, but also in the left and right positions, therefore are difficult to be mistaken.

Further, in the present embodiment, the screen image saving control part 44 is provided at one side of the home menu control part 43 in the left-right direction, while the screen image saving control part 44 is provided at the further one side (outside) from the first speaker openings 55. Here, the home menu control part 43 temporarily interrupts a game application being run, therefore there is no problem even if the hand of the user covers the display 5 at the time of operating it, while the screen image saving control part 44 is operated while the game application is being run, therefore if the hand of the user covers the display 5, it is liable to become difficult for the user to check the image shown on the display 5 while operating the screen image saving control part 44. As opposed to this, the screen image saving control part 44 is provided at the bottom surface 14 relatively to the outside (position away from center of bottom surface 14). Therefore, when the user operates the screen image saving control part 44, the possibility of the hand of the user covering the display 5 is low. For this reason, in the present embodiment, the user can easily view the image shown on the display 5 while operating the screen image saving control part 44.

Further, since the screen image saving control part 44 is provided relatively outside at the bottom surface 14, the user can easily, for example, switch from a state wherein his hand is positioned at the right surface of the portable game device 1 to a state wherein his index finger is positioned at the top surface 13 and the screen image saving control part 44 is operated by his thumb, and accordingly the user can easily operate the screen image saving control part 44.

Further, the screen image saving control part 44 does not have control parts having a symmetrical relationship such as, for example, + button and a - button. If there were some type of control part at a symmetric position with the screen image saving control part 44 with respect to the center of the bottom surface 14, there is a possibility that these control parts would be mistakenly recognized as control parts having functions related to and separate from the the screen image saving control part 44. In the present embodiment, no such control part is provided at a symmetric position with the screen image saving control part 44 with respect to the center of the bottom surface 14, and therefore the possibility of such a mistake arising is reduced.

In addition, the screen image saving control part 44 is arranged in the left-right direction at the opposite side (in the present embodiment, the right side) of the side where the power control part 41 and the volume control part 42 are provided (in the present embodiment, the left side). Therefore, the screen image saving control part 44 is offset from the power control part 41 and the volume control part 42 not only in top-bottom relationship, but also in left-right positions, therefore mistaken recognition of these control parts seldom ever occurs.

It should be noted that, as explained above, the screen image saving control part 44 is envisioned as being operated while running a game application. Therefore, in a state where the user is not holding the portable game device 1 to play a game application, but just placing it on a desktop, there is little chance of operation of the screen image saving control part 44 being desired. Therefore, there is little possibility of inconvenience arising even if the screen image saving control part 44 is provided at the bottom surface 14 rather than the top surface 13, the left surface 15, and the right surface 16. Further, it is possible to reduce mistaken operation liable to occur when the screen image saving control part 44 is arranged at the top surface 13, the left surface 15, or the right surface 16.

### <Modifications>

In the above embodiments, the control parts 41 to 44, each of which performs the same function when they are operated regardless of an application being run, are provided at only the top surface 13 and the bottom surface 14. However, some of these control parts 41 to 44 may be provided at the left surface 15 or the right surface 16. In this case as well, due to the front surface 11 not being provided with the control parts 41 to 44, the front surface 11 of the portable game device 1 can be made more compact and the ratio of the area of the display 5 can be increased more without impairing user operability. Further, part of these control parts may also be provided at the back surface 12 as long as the power control part 41 and the home menu control part 43 are respectively provided at the top surface 13 and the bottom surface 14. In addition, part of these control parts may also be provided at the front surface 11 as long as the power control part 41 and the home menu control part 43 are respectively provided at the top surface 13 and the bottom surface 14.

Further, the portable game device 1 may also be provided with any number and type of control parts 31 to 34 and 41 to 44 different from the above embodiments. However, the power control part 41 and the home menu control part 43 have to be respectively provided at the top surface 13 and the bottom surface 14 and the control parts used for input from the user, in particular, the control parts used for inputting operations for progression of a game application, have to be provided at both of the left and right sides of the display 5.

Furthermore, in the above embodiments, the control parts 31 to 34 are arranged so as to extend passing through openings provided at the walls of the housing 20. However, the control parts 31 to 34 may be placed on the walls without passing through openings.

Further, the display 5 and some of the control parts may be separable. For example, parts of the housing 20 having control parts provided at the left and right sides of the display 5 may be detachable from the part of the housing 20 having the display 5. Alternatively, the display 5 may be detachable from the integral housing 20 having control parts provided at both of the left and right sides of the display 5.

Preferred embodiments according to the present invention were explained above, but the present invention is not limited to these embodiments and can be modified and changed in various ways within the scope of the claims.

### REFERENCE SIGNS LIST

1 portable game device
5 display
11 front surface
12 back surface
13 top surface
14 bottom surface
31 first control part
32 second control part
41 power control part
42 volume control part
43 home menu control part
44 screen image saving control part
55 first speaker openings
56 second speaker openings

## Claims

1. A portable game device comprising: a front surface; a back surface provided at an opposite side from the front surface; and a top surface, bottom surface, left surface, and right surface provided between the front surface and the back surface so as to connect them, wherein
the front surface is provided with a display for showing an image and with control parts provided at both of left and right sides of the display and used for input from a user,
the top surface is provided with a power control part, and
the bottom surface is provided with a home menu control part.

2. The portable game device according to claim 1, wherein
the power control part is provided at the top surface at a position offset to one side from a center in the left-right direction, and
the home menu control part is provided at the bottom surface at a center in the left-right direction.

3. The portable game device according to claim 2, wherein
the bottom surface is provided with an opening extending passing through a side wall defining the bottom surface at least at one side of the home menu control part in the left-right direction, and
a screen image saving control part is provided at further the one side from the opening in the left-right direction.

4. The portable game device according to claim 3, wherein the home menu control part is larger than the screen image saving control part.

5. The portable game device according to claim 3 or 4, wherein
the openings are provided respectively at both sides of the home menu control part in the left-right direction,
the screen image saving control part is provided at further outside from the opening at the one side in the left-right direction,
control parts are not provided at further outside from the opening at the other side.

6. The portable game device according to any one of claims 3 to 5, wherein the screen image saving control part is provided at an opposite side from a side where the power control part is provided with respect to the center of the portable game device in the left-right direction.

7. The portable game device according to any one of claims 1 to 6, wherein
the power control part is provided at the top surface at a position offset to one side from a center in the left-right direction, and
the top surface is provided with a volume control part for adjusting a sound volume of the portable game device at further the one side of the power control part.

8. The portable game device according to claim 7, wherein
a control part used for input from the user is further provided at the top surface, and
the control part provided at the top surface is arranged at further outside from the volume control part in the left-right direction.

9. The portable game device according to any one of claims 1 to 8, wherein control parts, each of which performs the same function regardless of a game application being run when being operated, are provided only at the top surface and the bottom surface.
